(19) Europäisches Patentamt
European Patent Office
Office européen des brevets

(11) EP 0 869 164 A1

# (12) EUROPÄISCHE PATENTANMELDUNG

(43) Veröffentlichungstag:
**07.10.1998 Patentblatt 1998/41**

(51) Int. Cl.[6]: **C10M 105/72**, C10M 135/28, C07D 487/22, C10L 1/24

(21) Anmeldenummer: **98102492.0**

(22) Anmeldetag: **13.02.1998**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **04.04.1997 DE 19714027**

(71) Anmelder:
**NEMATEL Dr. Rudolf Eidenschink**
**55129 Mainz (DE)**

(72) Erfinder:
- **Eidenschink, Rudolf, Dr.**
  **55129 Mainz (DE)**
- **Kretzschmann, Holger, Dr.**
  **55452 Rümmelsheim (DE)**

(74) Vertreter:
**Weber, Dieter, Dr. et al**
**Weber, Dieter, Dr.,**
**Seiffert, Klaus, Dipl.-Phys.,**
**Lieke, Winfried, Dr.**
**Postfach 61 45**
**65051 Wiesbaden (DE)**

## (54) Schmiermittel enthaltend schwefelhaltige Phthalocyanine oder deren Metall-Komplexe

(57) Ein Schmiermittel, enthaltend ein oder mehrere schwefelhaltige Phthalocyanine oder deren Metall-Komplexe ergibt in Reibpaarungen besonders niedrige Reibungskoeffizienten.

EP 0 869 164 A1

## Beschreibung

Zur Herabsetzung des Verschleißes und des Energieverlustes durch Reibung werden Maschinenlager und Getriebe bekanntlich mit einem Schmiermittel versehen, das während des Betriebes eine möglichst vollständige Trennung der gegeneinander bewegten Festkörper ermöglicht. Die Schmiermittel können in Schmierflüssigkeiten und Schmierfette unterteilt werden.

Als herkömmliche Schmierflüssigkeiten sind aus Erdöl gewonnene Mineralöle synthetische Öle, wie Polyalkylenglykole, Esteröle oder Phosphorsäureester, und Silikonöle in Gebrauch (vgl. Übersicht in Ullmanns Enzykl. der technischen Chemie, 4. Auflage Bd. 20). Bekannt sind auch mesogene Flüssigkeiten, d.h. thermotrop flüssigkristalline Phasen bildende Flüssigkeiten, die im Schmierspalt aus einer niederviskosen in eine hochviskose Phase, und umgekehrt, übergehen können (US.5,160,451; Höhn et al., Tribologie-Fachtagung Göttingen 1996, Beitrag Nr. 13). Allgemein nennt man eine Flüssigkeit mesogen, wenn sie bei beliebig zu wählenden Bedingungen (Druck, Temperatur, Scherung, Oberflächenwechselwirkungen) eine oder mehrere flüssigkristalline Phasen bilden kann. Die Zusammenhänge zwischen chemischer Struktur und der Anordnung der Moleküle in solchen Phasen sowie dem Temperaturbereich, in welchem solche Phasen auftreten können, ist bekannt (z.B. H. Kelker, R. Hatz, Handbook of Liquid Crystals, Verlag Chemie, Weinheim 1980; C. Destrade et al., Mol. Cryst. Liq. Cryst. Vol. 106, 121 (1984)). Weitverbreitet ist die Schmierung mit Schmierfetten. Diese bestehen aus einer Schmierflüssigkeit und einem darin in feiner Form dispergierten Festkörper, dem sog. Eindicker, der auf die tribologischen Eigenschaften nur geringen Einfluß hat und in erster Linie die Funktion eines Speichers für die Schmierflüssigkeit hat. Daneben können auch sehr niederviskose organische Stoffe, wie Kraftstoffe für Ottomotoren (Benzin) und Dieselmotoren (Dieselkraftstoff) als Schmiermittel aufgefaßt werden, was durch den bekannten Einfluß des Kraftstoffes auf den Verschleiß von Düsennadeln von Kraftstoffeinspritzdüsen deutlich wird. Auch Lösungen und Emulsionen von organischen Flüssigkeiten in Wasser dienen als Schmiermittel, insbesondere als sog. Kühlschmiermittel bei der spanabhebenden Verformung von metallenen Werkstücken. Diese Kühlschmiermittel sind von der vorliegenden Erfindung umfaßt, sofern Verbindungen der Formel I (s.u.) in der organischen Phase der Emulsion gelöst sind.

Die in einer Reibpaarung - dies sind allgemein durch einen Schmierspalt getrennte, gegeneinander bewegliche feste Körper - auftretenden Energieverluste und Verschleißerscheinungen hängen in komplexer Weise vom Werkstoff des Maschinenelementes selbst, den Eigenschaften des Schmieröls, wie seiner Viskosität und seinen Wechselwirkungen mit dem Werkstoff, sowie von den Druck- und Geschwindigkeitsverhältnissen ab. Günstig sind geschlossene Tragfilme, wie sie etwa im hydrodynamischen Bereich von Gleitlagern oder im elastohydrodynamischen Bereich von Wälzlagern auftreten. Hohe Reibungsverluste - und die im allgemeinen mit ihnen korrelierenden Verschleißerscheinungen - treten besonders in Gleitlagern bei sog. Grenz- und Mischreibung auf (vgl. VDI Berichte 680, Das Öl als Konstruktionselement, VDI-Verlag, Düsseldorf 1988).

Zur Herabsetzung von Reibungsverlusten und Verschleiß werden sog. EP (Extreme Pressure)- und AW (Anti Wear)-Zusätze verwendet (vgl. Ullmann), die Schutzschichten zwischen den Lagerteilen bilden können. Besonders bevorzugt sind organische Schwefel- und Phosphorverbindungen. Insbesondere sind für Stahl-Stahl-Reibpaarungen Zink-dialkyl-dithiophosphate günstig. Die Wirksamkeit eines Additives hängt sehr von der chemischen Struktur der Komponenten der Schmierflüssigkeit ab. Bekannt sind auch Zusätze von Metall-Komplexen des Phthalocyanins. Diese werden in suspendierter Form in Ölen (DE 3230593) oder als Zusätze für wäßrige Schneidöle (E. V. Berezina et al., Proc. Tribology - Solving Friction and Wear Problems, Esslingen 1996, 1231) verwendet; sie sind in unpolaren organischen Flüssigkeiten, wie es die allgemein bekannten Schmieröle sind, unlöslich. Die bekannten Schmiermittel sind verbesserungsbedürftig, weil die durch Berührung zwischen den Festkörpern in einem Maschinenlager bedingten Reibungsverluste nur unzureichend vermieden werden können. Insbesondere sind Schmiermittel auf der Basis mesogener Flüssigkeiten verbesserungsbedürftig, weil die bekannten Additive nicht mesogen sind und sie deshalb wie bekanntermaßen andere nichtmesogenen Verbindungen den Temperaturbereich, in dem flüssigkristalline Phasen auftreten können, erniedrigen.

Aufgabe der Erfindung war es, ein Schmiermittel zu finden, das in Reibpaarungen besonders niedrige Reibungsverluste ermöglicht. Die Aufgabe wird gelöst durch die Bereitstellung eines Schmiermittels, enthaltend eine oder mehrere Verbindungen der allgemeinen Formel I.

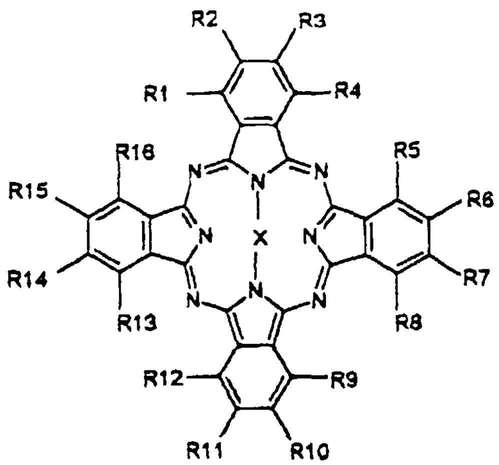

I

worin

X für ein Metall ausgewählt aus Mg, Ca, Zn, Cu, Ni, Co oder 2 Wasserstoffatome und

R1 bis R16 jeweils unabhängig voneinander für H, Cl, F, -OH, -SH, -Rx, -ORx und -SRx steht, wobei Rx ein organischer Rest mit 1 bis 18 C-Atomen ist, der einen Alkyl- oder Alkenylrest, worin auch eine oder bis zu 4 nichtbenachbarte $CH_2$-Gruppen durch -O-, -S-, substituiert sein können, und der auch ein- oder mehrfach durch -OH oder Halogen substituiert sein kann, einen unsubstituierten oder mit einem oder zwei Halogenatomen oder einer oder bis zu 3 Alkylgruppen mit 1 bis 9 C-Atomen, in denen jeweils eine $CH_2$-Gruppe durch O ersetzt sein kann, substituierten Phenyl- oder Cyclohexylrest, einen unsubstituierten oder mit einem oder zwei Halogenatomen oder einer oder bis zu 3 Alkylgruppen mit 1 bis 9 C-Atomen, in denen jeweils eine $CH_2$-Gruppe durch O oder S ersetzt sein kann, substituierten Benzyl- oder Cyclohexylmethylrest, einen 2-Benzothiazolylrest oder einen Naphthylrest bedeutet, mit der Maßgabe, daß mindestens 4 der Reste R1 bis R16 -SRx sind.

Es wurde überraschenderweise gefunden, daß das erfindungsmäßige Schmiermittel besonders niedrige Reibungsverluste in Reibpaarungen ermöglicht.

Die Verbindungen der Formel I umfassen die bevorzugten Teilformeln Ia bis Ic:

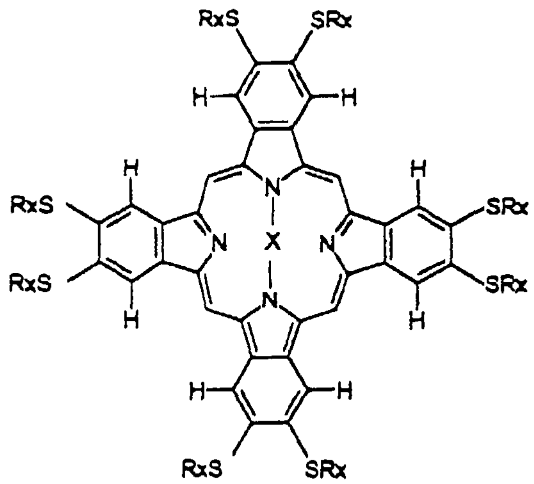

Ia,

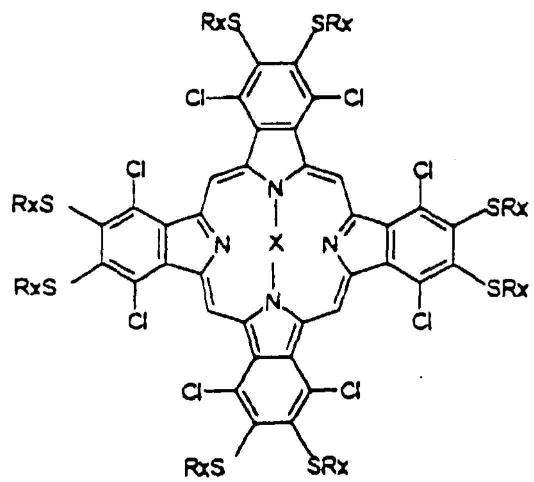

Ib,

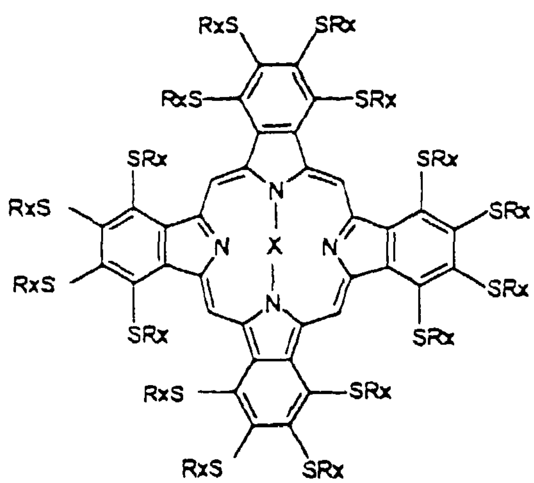

Ic,

In den Verbindungen der Formel I bedeuten Rx jeweils unabhängig voneinander bevorzugterweise eine Alkylgruppe mit 1 bis 18 C-Atomen, wobei unverzweigte Alkylgruppen mit 4 bis 12 C-Atomen besonders bevorzugt sind. Sie bedeuten dann Butyl, Pentyl, Hexyl, Heptyl, Octyl, Nonyl, Decyl, Undecyl und Dodecyl. Ebenfalls bevorzugt ist die Bedeutung von Rx als eine Gruppe, die eine substituierte oder unsubstituierte Phenyl- oder Cyclohexylgruppe enthält. Hierbei sind die Bedeutungen von Rx als unsubstituierte Phenylgruppe und als Cyclohexylmethylgruppe besonders bevorzugt. Daneben sind die kondensierten aromatischen Reste 2-Naphthyl und 2-Benzothiazolyl bevorzugt.

Die Moleküle der Verbindungen der Formel I enthalten mindestens 4 Schwefelatome. Für die höchstens zwölf der Substituenten $R_1$ bis $R_{16}$, die nicht -SRx bedeuten können, kommen die Substituenten H, Cl, F, -SH, -OH, -Rx, und -ORx in Frage. Hierbei sind H, Cl und F bevorzugt.

In Formel I können für X die Metallatome Mg, Ca, Zn, Cu und Ni sowie zwei Wasserstoffatome stehen. Bevorzugt sind die Bedeutungen als zwei Wasserstoffatome, Cu sowie Zn sowie Ni.

Die Verbindungen der Formel I werden nach ansich bekannten Methoden dargestellt, wie sie in der Literatur (z.B. in Standardwerken wie Houben-Weyl, Methoden der Organischen Chemie, Georg-Thieme-Verlag, Stuttgart; C. C. Leznoff, A. B. P. Lever, Editors, Phthalocyanines, VCH, New York 1989) beschrieben sind, und zwar unter Reaktionsbedingungen, die für die genannten Umsetzungen bekannt und geeignet sind.

Ausgangsstoffe sind substituierte Phthalsäureanhydride, Phthalodinitrile und Phthalsäuren. Die Ringbildung erfolgt in Anwesenheit von Metallen, Metallsalzen oder Metalloxiden in hochsiedenden Lösungsmitteln. Zur Herstellung der metallfreien Phthalocyanine der Formel I (X = 2 Wasserstoffatome) verwendet man auch Alkalimetallhydroxide. Aus den zunächst entstehenden Dialkalisalzen werden die metallfreien Phthalozyanine durch Umsetzung mit Säuren freigesetzt. Verwendet man bei der Ringbildungsreaktion ein Gemisch von verschieden substituierten Phthalodinitrilen, erhält man ein Gemisch von Verbindungen der Formel I. Auf diese Weise kann eine hohe Gesamtkonzentration an Verbindungen der Formel I in dem erfindungsmäßigen Schmiermittel auch bei tiefen Temperaturen gewährleistet werden, ohne daß ein Auskristallisieren dieser Verbindungen befürchtet werden müßte. Setzt man beispielsweise ein Gemisch aus 4,5-Bis[octylthio]phthalodinitril und 4,5-Bis[cyclohexylmethylthio]phthalodinitril in an und für sich bekannter Weise mit einer starken organischen Base, wie z.B. DBU (vgl. Beispiel 1), in einem polaren Lösungsmittel, wie z.B. Dimethylsulfoxid, um, erhält man ein Gemisch der Verbindungen

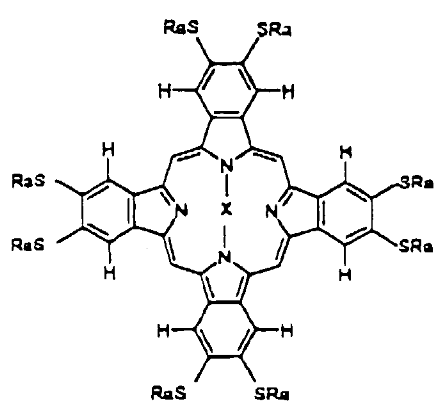

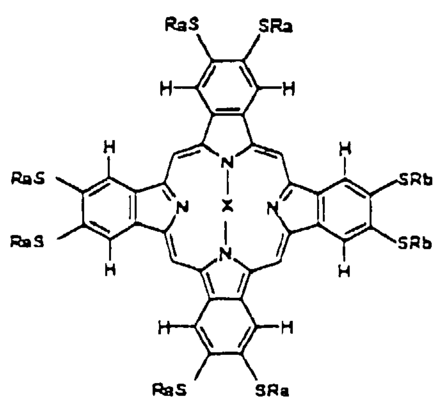

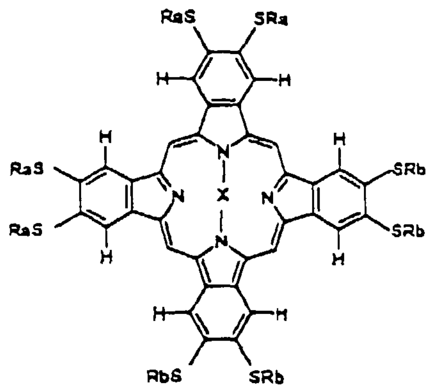

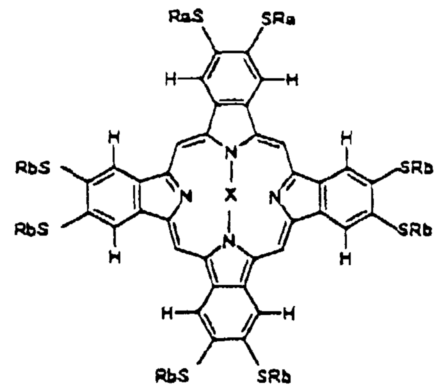

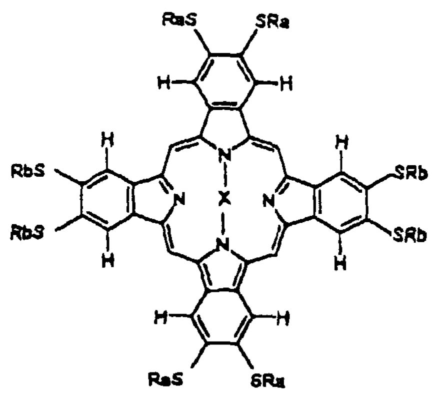

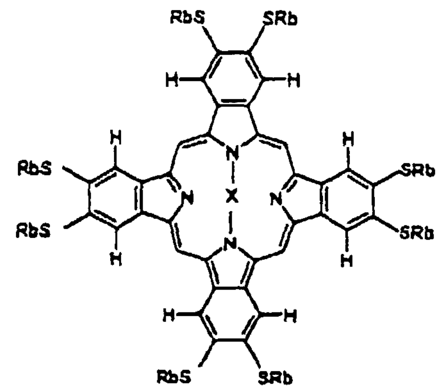

Ra = $-SC_8H_{17}$   Rb = $-SCH_2$– 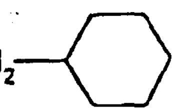

Verbindungen der Formel Ia werden vorzugsweise, ausgehend von 4,5-Dichlor-phthalsäuredinitril, über die 4,5-Dithio-phthalsäuredinitrile (durch Umsetzung mit Thiolen oder Alkalithiolaten) durch allgemein bekannte Ringschlußreaktionen hergestellt (A. G. Gürek, Ö. Bekaroglu, J. Chem. Soc. Dalton Trans. 1419 (1994)). Die Herstellung der Hexadecakis[alkylthio]phthalocyanine sowie anderer Verbindungen der Formel Ic ist in ähnlicher Weise - wenn auch mit bedeutend schlechteren Ausbeuten - ausgehend von den 3,4,5,6-Tetrachlorphthalodinitrilen über die durch eine nucleophile Substitution erhältlichen Thioether möglich. Eine vorteilhafte Herstellung von Verbindungen der Formeln I ist die durch Umsetzung kommerziell erhältlicher Chlor- und Fluorphthalocyanine bzw. ihrer Metallkomplexe mit Alkalithiolaten in polaren aprotischen Lösungsmitteln und anschließender Hydrolyse. Je nach Reaktionsbedingungen werden mehr oder weniger Chloratome durch -SRx ersetzt. So entstehen bei 120 °C in Tetraethylenglykoldimethylether mit Natriumoctylthiolat hauptsächlich Verbindungen der Formel I mit 12 bis 16 -SRx-Gruppen, während bei der Umsetzung bei Raumtemperatur mit Alkylthiolen in Dimethylsulfoxid bei Anwesenheit von Kaliumcarbonat Verbindungen erhalten werden, deren Summenformeln auf die Struktur der Formel Ib zutrifft.

Es können auch 4-Thiol-phthalodinitrile und schwefelfreie Phthalodinitrile sowie die entsprechenden Phthalsäuren bzw. Phthalsäureanhydride bei der ringbildenden Reaktion eingesetzt werden. Solche schwefelfreien Verbindungen sind z.B. Phthalodinitril, 4,5-Dichlorphthalodinitril oder 3,4,5,6-Tetrachlorphthalodinitril. So entsteht bei der Umsetzung von 4,5-Bis[octadecylthio]phthalodinitril mit Phthalodinitril unter den o.g. Reaktionsbedingungen (Gürek) ein Gemisch, das unter anderen folgende Verbindungen der Formel I umfaßt

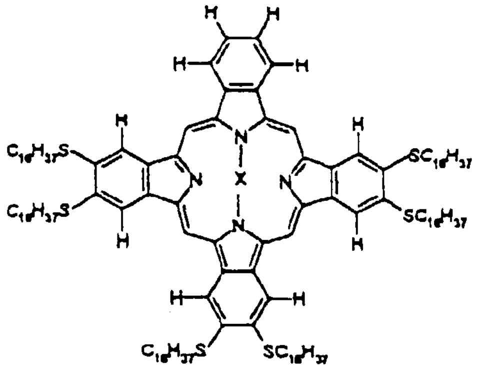

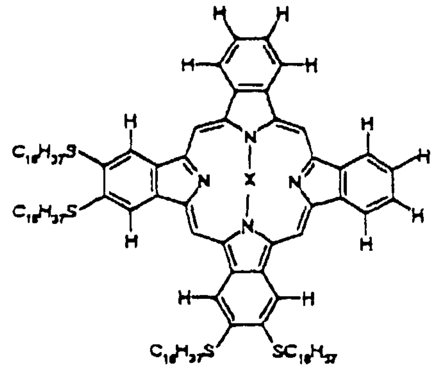

Das erfindungsmäßige Schmiermittel wird hergestellt durch Einrühren der Verbindungen I bei Raumtemperatur in organische Flüssigkeiten, die für sich als Schmiermittel bekannt sind, wie z.B. Esteröle, Mineralöle, Polyethylenglykole (vgl. Ullmann). Innerhalb der vorliegenden Erfindung zählen zu diesen organischen Flüssigkeiten auch mesogene Verbindungen und Mischungen aus mesogenen Verbindungen sowie Mischungen aus mesogenen und nichtmesogenen Verbindungen, ferner Kraftstoffe für Otto- und Dieselmotoren. Die Konzentrationen an Verbindungen Ia und Ib in dem Schmiermittel liegt bei Verwendung zur Schmierung von Gleit- und Wälzlagern bevorzugterweise im Bereich von 0,1 bis 10%. Das Schmiermittel kann aber auch bis zu 100% aus Verbindungen der Formeln I bestehen, insbesondere wenn es zur reibungsarmen Trennung von Werkstücken aus Sintermetall von dem formgebenden Werkzeug verwendet wird. Hierfür wird es dem zu sinternden Metallpulver beigefügt. Bei dem diesbezüglichen Arbeitsgang, der normalerweise bei >150°C stattfindet, ist das Schmiermittel flüssig oder flüssigkristallin. In Kraftstoffen liegt die Konzentration an Verbindungen der Formeln I bevorzugterweise unterhalb von 0,1%.

Das erfindungsmäßige Schmiermittel kann neben einer oder mehreren Verbindungen der Formel I noch andere übliche Verbindungen enthalten. Dies können u.a. Antioxidantien, wie Derivate des 2,6-Di-tert.-butyl-phenols, Hochdruckzusätze, wie Zinkdialkyl-dithiophosphate, Reibminderer, Lichtschutzmittel, Emulgatoren oder Demulgatoren oder Antischaummittel sein.

In diesen Schmiermitteln liegen alle Komponenten in moleküldisperser Form vor. Durch Einarbeitung von nichtmoleküldispers vorliegenden Eindickern kann hieraus ein ebenfalls von der Erfindung umfaßtes Schmierfett hergestellt werden. Besonders geeignete Eindicker sind Lithium-12-hydroxy-stearat und Pulver aus Polytetrafluorethylen (z.B. Mikroteflonpulver 5μ, Dr. Tillwich GmbH, Horb). Innerhalb der vorliegenden Erfindungen werden auch zur Bildung von Gelen dienende Polymere, wie etwa sog. Seitenkettenpolymere (H. Ringsdorf et al., Angew. Chem. 101, 934 (1989) und dort zitierte Literatur), als auch anorganische feste Zusätze, wie Molybdändisulfid, Calciumphosphat, Zinkdiphosphat oder Graphit, zu den Eindickern gezählt. Ein erfindungsmäßiges Schmierfett kann bis zu 35% solcher Eindicker enthalten. Die Unterscheidung zwischen moleküldispersen und nichtmoleküldispersen Stoffen kann durch eine Ultrazentrifugation (z.B. mit der Ultrazentrifuge Beckmann L8-M bei einer Zentrifugalbeschleunigung zwischen $7x10^5$ und $6x10^5$ $m/s^2$ bei 25°C, 10 min) in an sich bekannter Weise erfolgen.

Es wurde gefunden, daß die erfindungsmäßigen Schmiermittel, die bei Normaldruck bei einer Temperatur oberhalb von -40°C eine thermotrop flüssigkristalline Phase bilden, in Reibpaarungen besonders niedrige Reibungsverluste ermöglichen. Dies ist möglicherweise auf eine günstige Ausrichtung der Moleküle der Verbindungen der Formeln I zurückzuführen. Auch können durch Zusatz der Verbindungen der Formel I zu mesogenen Flüssigkeiten die Temperaturbereiche, in denen flüssigkristalline Phasen existieren können, nach oben verschoben werden. Flüssigkristalline Phasen werden unterschieden in calamitische Phasen, die von Molekülen mit langgestreckter Form gebildet werden, und diskotische Phasen, die von tellerförmigen Molekülen gebildet werden (vgl. Destrade). Die Phasenzugehörigkeit ist nach allgemeingültigen Gesetzen der Thermodynamik vom Druck und von der Temperatur abhängig, von zwei Größen, deren Messungen an den kritischen, mikroskopisch kleinen Stellen eines Maschinenlagers sehr schwierig sind. Möglicherweise begünstigen auch Wechselwirkungen der erfindungsmäßigen Schmiermittel an der Oberfläche der Lagermaterialien günstige, zu niedrigen Reibungsverlusten führende molekulare Ausrichtungen. Bevorzugt sind Schmiermittel, die diskotische Phasen bilden können. Solche Phasen können von reinen Verbindungen der Formel I und Mischungen mehrerer Verbindungen der Formel I gebildet werden. Neben den Verbindungen der Formeln I können solche, zur Bildung diskotischer Phasen befähigte Schmiermittel noch andere Verbindungen enthalten. Bevorzugte Komponenten hierbei sind Verbindungen der Formel II

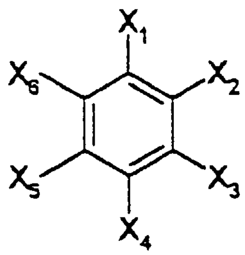

II,

worin mindestens 3 der Substituenten $X_1$ bis $X_6$ einen nichtcyclischen organischen Rest mit jeweils 6 bis 18 C-Atomen bedeuten,
der Formel III

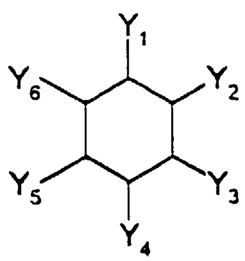

III,

worin mindestens 3 der Substituenten $Y_1$ bis $Y_6$ einen nichtcyclischen organischen Rest mit 6 bis 18 C-Atomen bedeuten und der Formel IV

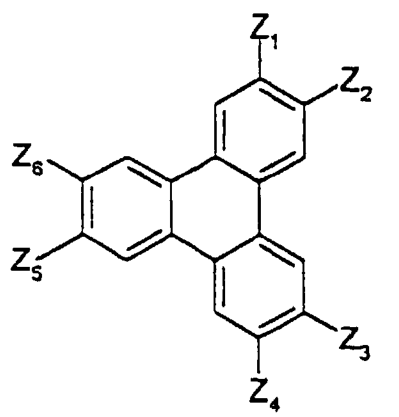

IV,

worin mindestens 3 der Substituenten $Z_1$ bis $Z_6$ einen nichtcyclischen organischen Rest mit 6 bis 18 C-Atomen bedeuten.

Für $X_1$ bis $X_6$, $Y_1$ bis $Y_6$ sowie $Z_1$ bis $Z_6$ sind die bevorzugten Bedeutungen Alkyl, Alkylthio, Alkoxy, Alkoxycarbonyl, Acyloxy, H, Cl, SH und OH.

Von der vorliegenden Erfindung sind solche diskogenen Schmiermittel umfaßt, deren Gesamtgehalt an Verbindungen der Formeln II, III und IV zwischen 99,9 und 0 % liegt. Vorzugsweise liegt er zwischen 99,8 % und 10 %. Unter den Verbindungen II bis IV sind als komponenten des erfindungsmäßigen Schmiermittels die Verbindungen der Formel II bevorzugt.

Es wurde außerdem gefunden, daß allgemein Reibpaarungen auch mit denjenigen erfindungsmäßigen Schmiermitteln, die oberhalb von -40°C unter Normaldruck keine thermotrope flüssigkristalline Phase bilden können in Reibpaarungen günstige Reibungsverluste aufweisen. Insbesondere Gleitlager und Wälzlager zeigen bei Verwendung der erfindungsmäßigen Schmiermittel geringere Reibungsverluste als bei Verwendung von Schmiermitteln, die nicht eine oder mehrere Verbindungen der Formel I enthalten. Die erfindungsmäßigen Schmiermittel können vorteilhaft als Motorenöle zur Schmierung der Gleitpaarungen in den Kolbengruppen verwendet werden. Ebenfalls vorteilhaft ist ihre Verwendung als Kraftstoffe für Otto- und Dieselmotoren mit einem auf wenig Reibung zurückzuführenden Verschleiß der Düsennadeln der Einspritzdüsen, zur Kaltverformung von Metallen (Tiefziehen von Blechen) sowie zur Herabsetzung der Reibung von Werkstücken aus Sintermetall bei der Entfernung aus der Sinterform.

Die in einer Reibpaarung auftretenden Energieverluste hängen in komplexer Weise vom Werkstoff der beteiligten Festkörper, den Eigenschaften der Schmiermittel sowie von den Druck- und Geschwindigkeitsverhältnissen ab. Es ist allgemein üblich, als Maß für die Reibung und somit für die Reibungsverluste den Reibungskoeffizienten $\mu$ anzugeben. $\mu$ ist definiert als Quotient aus $F_R$ (Reibungskraft) und $F_N$ (Normalkraft = Kraft, mit der die Festkörper gegeneinander gedrückt werden).

$$\mu = F_R/F_N$$

Um die Fähigkeit verschiedener Schmiermittel, die Reibungsverluste in Reibpaarungen herabzusetzen, vergleichen zu können, werden in genormten Prüfmaschinen Werte für $\mu$ unter Bedingungen gemessen, die den Bedingungen der Anwendung möglichst nahe kommen. Eine weitverbreitete Methode ist der sog. SRV-Test (Optimol Instruments Prüftechnik GmbH, München; DIN 51834, Teil 1 und 2), der vor allem im Bereich der Grenz- und Mischreibung aussagekräftig ist.

Die erfindungsmäßigen Schmiermittel enthalten neben organischen Verbindungen, die für sich als Schmieröle verwendet werden können, eine oder mehrere Verbindungen der Formel I. Das Schmiermittel kann bei Raumtemperatur und Normaldruck (atmosphärischer Druck) in der isotropen oder einer thermotrop-flüssigkristallinen Phase (nematisch, smektisch, diskoid-nematisch oder columnar-diskotisch, vgl. Kelker und Destrade) vorliegen. Darüberhinaus kann auch ein gelförmiger Zustand, wozu auch lyotrop-flüssigkristalline Phasen zu zählen sind, vorliegen.

Die Verbindungen der Formel I können aus dem Schmiermittel durch allgemein bekannte Trennungsmethoden isoliert und ihre chemische Strukturformel mit allgemein bekannten analytischen und spektroskopischen Methoden bestimmt werden. Getrennt wird zweckmäßiger Weise mittels der sog. HPLC (High Performance Liquid Chromatography) mit organischen Fließmitteln und einer stationären Phase aus Kieselgelpartikeln (z.B. LiChrosorb, Merck KGaA, Darmstadt). Als spektroskopische Methode kommen massenspektroskopische Methoden (H.Budzikiewicz, Massenspektroskopie 3. Auflage, Verlag Chemie Weinheim 1992) sowie die bekannten Methoden der Kernresonanzspektroskopie in Frage. Daneben sind zur Strukturaufklärung die Elementaranalyse und die Absorptionsspektroskopie hilfreich.

Die folgenden Beispiele sollen die Erfindungen erläutern, ohne sie zu begrenzen. Vor- und nachstehend sind alle Temperaturen in °C und alle Gehaltsangaben in Masseprozent.

<u>Beispiel 1</u>

44,2 g Octantinol und 29,6 g 4,5-Dichlor-phthalodinitril werden unter Stickstoff in 175 ml absolutem Dimethylsulfoxid gelöst. Hierauf werden innerhalb von 2 h portionsweise 75 g feingemahlenes Kaliumcarbonat zugefügt und das Reaktionsgemisch unter Stickstoff 16 h bei Raumtemperatur gerührt. Nach der Zugabe von 500 ml Wasser wird 4 mal mit je 100 ml Chloroform extrahiert. Die vereinigten organischen Phasen werden nacheinander mit 100 ml 5%iger Natriumcarbonat-Lösung und dann 2 mal mit Wasser gewaschen. Nach Trocknen mit Natriumsulfat und Abdestillieren des Chloroforms bleiben 61,2 g eines öligen Rückstandes. Dieser wird in 1200 ml heißen Ethanol gelöst. Die aus dieser Lösung bei Raumtemperatur entstandenen Kristalle werden abgesaugt und im Vakuum getrocknet: 47,4 g 4,5-Bis[octylthio]phthalodinitril, Schmelzpunkt 59°C.

40 g hiervon werden in 3 l Pentanol gelöst und unter Stickstoff 15 g 1,8-Diazabicyclo[5.4.0]undec-7-en (DBU) gegeben und die Lösung 72 h am Rückfluß erhitzt. Nach dem Abkühlen auf Raumtemperatur und 24stündigen Stehenlassen wird das dunkelgrüne Pulver abgesaugt und 3 mal mit 200 ml heißem Ethanol gewaschen. Nach dem Trocknen ergeben sich 13,7 g 2,3,9,10,16,17,23,24-Octakis[octylthio]-29H,31H-phthalocyanin, Absorptionsmaximum (in Dichlormethan) bei 699 nm, Extionktionskoeffizient $6{,}72 \times 10^4$ 1000 $cm^2$/mol.

Ein Schmierstoff, hergestellt durch Lösen von 10 mg dieser Verbindung in 10 g eines Dieselkraftstoffes (EN 590) wird auf sein Reibungsverhalten in einem SRV-Prüfstand der Fa. Optimol Instruments Prüftechnik GmbH untersucht.

In der Anordnung Zylinder gegen Platte wird der Zylinder mit geregelter Frequenz, Normalkraft und geregeltem Hub horizontal unter 10° zur Hubrichtung über die Platte bewegt. Die Apparatur ist mit einem Rechner gekoppelt, der die Meßdatenerfassung übernimmt. In Abhängigkeit von der Zeit können an diesem Rechner sämtliche eingestellten Parameter (Kraft, Frequenz, Hub, Temperatur) sowie der Reibwert (Reibungskoeffizient) und der Verschleiß ausgegeben werden.

Für die Versuche werden Zylinder und Platten aus 100Cr6 verwendet (Prüfkörper der Fa. Optimol). Der Zylinder weist eine polierte Oberfläche auf, die Platten sind geläppt mit einer gemittelten Rauhtiefe $R_z$ von 0,45 µm bis 0,65 µm. Der Zylinder hat eine Länge von 22 mm und einen Durchmesser von 15 mm; die Platte hat einen Durchmesser von 24

mm und eine Höhe von 7,9 mm. Der Zylinder ist leicht ballig zu den Stirnflächen hin geschliffen, so daß sich eine Kontaktlänge (Linienkontakt) von ca. 15 mm ± 0,5 mm ergibt. Vor einem Einsatz der Probenkörper werden sie zweimal je 5 Minuten in Aceton im Ultraschallbad gereinigt. Zwischen den einzelnen Experimenten werden die Probenkörper, bei mehrmaliger Verwendung, mit Aceton gereinigt.

Nach Reinigung der Probenkörper und Einbau in die Prüfmaschine werden 2 bis 3 Tropfen Schmierstoff auf die Probenoberfläche der Platte aufgebracht. Nach Einstellung der Versuchsparameter (10 N, 50 Hz, 1 mm, RT, 2 h) werden die Proben unter Prüflast in Kontakt gebracht und der Versuch gestartet. Es fand keine Einlaufphase bei einer verringerten Belastung statt. Die rel. Luftfeuchtigkeit während der Experimente bewegte sich zwischen 30% und 45% (Laboratmosphäre). Die Temperatur der Proben bzw. des Schmiermediums ergab sich aus der entstehenden Reibwärme und bewegte sich zwischen 21°C und 28°C. Die mittlere Geschwindigkeit aus den oben angeführten Parametern ergibt sich zu 0,1 m/s, der zurückgelegte Gleitweg nach 2 Stunden Versuchsdauer beträgt 720 m.

Nach dieser Zeit wird ein Reibungskoeffizient $\mu$ von 0,09 gemessen. Ein Vergleichsversuch mit dem reinen Dieselöl ergibt bei sonst gleichen Bedingungen ein $\mu$ von 0,17.

Beispiel 2

10 g des Octakis[octylthio]phthalocyanins aus Beispiel 1 werden mit 1,5 g wasserfreiem Zinkacetat und 30 ml Chinon zusammengegeben und bei 200°C unter Stickstoff 6 h lang mit einem Magnetrührer gerührt. Das auf Raumtemperatur abgekühlte Reaktionsgemisch wird mit 30 ml Ethanol versetzt. Die dunkelgrünen Kristalle werden abgesaugt und mit 200 ml heißem Ethanol gewaschen. Der aus den vereinigten Filtraten nach 24 h ausgefallenen Niederschlag wird abfiltriert und mit dem ersten Niederschlag vereinigt. Die vereinigten Kristalle werden mit 100 ml Ethanol aufgekocht, abfiltriert und getrocknet:

Ausbeute: 6,0 g 2,3,9,10,16,17,23,24-Octakis[octylthio]-29H,31H-phthalocyanin-Zink-Komplex
Absorbtionsmaximum (in Dichlormethan) 711 nm,
Extinktionskoeffizient $7{,}67 \times 10^4$ 1000 $cm^2$/mol.

In dem in Beispiel 1 beschriebenen Prüfstand unter den dort genannten Bedingungen ergibt ein Schmiermittel, hergestellt aus 30 mg dieser Zink-Verbindung und 1 g des kommerziellen Schmieröls (Mineralölbasis) Tellus 100 (Shell AG) einen Reibungskoeffizienten $\mu$ von 0,12. Unter den selben Bedingungen ergibt Tellus 100 einen Reibungskoeffizienten von 0,19.

Beispiel 3

5,0 g des käuflichen Hexadecachlor-29H,31H-phthahlocyanins, 20,0 g Octanthiol, 20,2 g wasserfreies Kaliumcarbonat und 50 ml absolutes Dimethylsulfoxid werden zusammen in einem Glaskolben unter Stickstoff bei Raumtemperatur 14 Tage lang mit einem Magnetrührer gerührt. Der Kolbeninhalt wird dann mit 150 ml Wasser verrührt und die entstandene Suspension 3 mal mit 100 ml Dichlormethan ausgeschüttet. Die vereinigten organischen Phasen werden 6 mal mit 50 ml Wasser gewaschen, dann mit Natriumsulfat getrocknet und das Dichlormethan abdestilliert. Der Rückstand wird im Ölpumpenvakuum (< 0,1 mbar) bei 100°C von überschüssigem Octanthiol befreit. Der nun verbleibende feste Rückstand wird in einem Gemisch aus 20 ml Petroleumbenzin und 10 ml Dichlormethan gelöst und die Lösung über eine kurze chromatographische Säule (100 g Kieselgel, Petroleumbenzin/ Dichlormethan 2:1) getrennt. Die Hauptfraktion von 7,8 g enthält nach FD-Massenspektrogramm Octachlor-octakis[octylthio]phthalocyanin neben anderen Verbindungen, die von der Formel I umfaßt sind. Durch Verrühren von 50 mg dieses Gemisches mit 1 g Hexakis[octylthio]benzol wird ein Schmierstoff hergestellt. Ein Tropfen hiervon wird zwischen zwei Glasplättchen auf -40°C gekühlt. Unter dem Polarisationsmikroskop wird eine diskotische flüssigkristalline Phase beobachtet, die beim Erwärmen in die isotrope Phase übergeht. Das Reibungsverhalten des Schmierstoffes wird mit dem in Beispiel 1 genannten Prüfstand unter den dort genannten Bedingungen untersucht. Es ergibt sich ein Reibungskoeffizient von 0,07. Der mit reinem Hexakis[octylthio]benzol unter gleichen Bedingungen gemessene Reibwert beträgt 0,12.

Beispiel 4

In der in Beispiel 1 gezeigten Weise wird aus einem Gemisch im molaren Verhältnis 1:1:1 von 4,5-Bis[octylthio]phthalodinitril, 4,5-Bis[dodecylthio]phthalodinitril und 4,5-Bis[butylthio]phthalodinitril ein Gemisch aus 2,3,9,10,16,17,23,24-Octakis[alkylthio]-29H,31H-phthalocyaninen hergestellt. Analog zu Beispiel 2 wird hieraus durch Umsetzung mit wasserfreiem $NiCl_2$ ein Gemisch der entsprechenden Nickel-Komplexe hergestellt. Ein aus 2 g hiervon, 2 g Lithium-12-hydroxy-stearat und 6 g Pentakis[octylthio]benzol in allgemein bekannter Weise durch kurzes Erhitzen auf 220 °C hergestelltes Schmiermittel (Schmierfett) wird zur Schmierung eines Schneckengetriebes (F. Morat KG,

Eisenbach; Übersetzung 38:1, Schnecke A31Ü38, Schneckenrad A31Ü38B; 3000 Umdrehungen/min) benutzt. Das ohne Last laufende Getriebe hat nach 10 min Laufzeit eine etwa 10°C tiefere Temperatur als das gleiche Getriebe, wenn es mit einem aus 8 g Pentakis[octylthio]benzol und 2 g Lithium-12-hydroxy-stearat gefertigtem Schmierfett geschmiert wird.

## Patentansprüche

1. Schmiermittel, enthaltend eine oder mehrere Verbindungen der allgemeinen Formel I

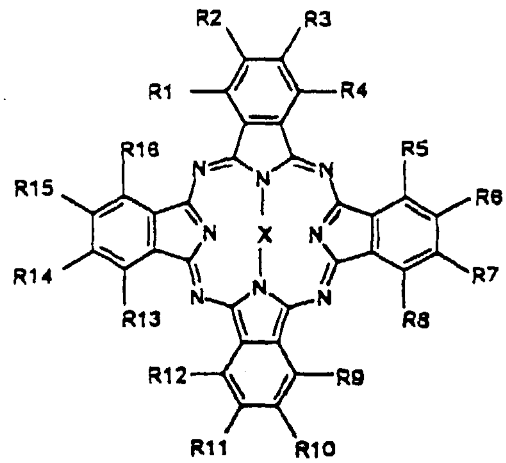

I

worin

X für ein Metall ausgewählt aus Mg, Ca, Zn, Cu, Ni, Co oder 2 Wasserstoffatome und

R1 bis R16 jeweils unabhängig voneinander für H, Cl, F, -OH, -SH, -Rx, -ORx und -SRx steht, wobei Rx ein organischer Rest mit 1 bis 18 C-Atomen ist, der einen Alkyl- oder Alkenylrest, worin auch eine oder bis zu 4 nichtbenachbarte $CH_2$-Gruppen durch -O-, -S-, substituiert sein können, und der auch ein- oder mehrfach durch -OH oder Halogen substituiert sein kann, einen unsubstituierten oder mit einem oder zwei Halogenatomen oder einer oder bis zu 3 Alkylgruppen mit 1 bis 9 C-Atomen, in denen jeweils eine $CH_2$-Gruppe durch O ersetzt sein kann, substituierten Phenyl- oder Cyclohexylrest, einen unsubstituierten oder mit einem oder zwei Halogenatomen oder einer oder bis zu 3 Alkylgruppen mit 1 bis 9 C-Atomen, in denen jeweils eine $CH_2$-Gruppe durch O oder S ersetzt sein kann, substituierten Benzyl- oder Cyclohexylmethylrest, einen 2-Benzothiazolylrest oder einen Naphthylrest bedeutet, mit der Maßgabe, daß mindestens 4 der Reste R1 bis R16 -SRx sind.

2. Schmiermittel nach Anspruch 1, dadurch gekennzeichnet, daß R1, R4, R5, R8, R9, R12, R13 und R16 jeweils unabhängig voneinander H oder Cl und R2, R3, R6, R7, R10, R11, R14 und R15 jeweils unabhängig voneinander eine Alkylthiogruppe $-SC_nH_{2n+1}$ mit n von 1 bis 18 ist.

3. Schmiermittel nach Anspruch 1, dadurch gekennzeichnet, daß R1 bis R16 jeweils unabhängig voneinander eine Alkylthiogruppe mit $-SC_nH_{2n+1}$ mit n von 1 bis 18 ist.

4. Schmiermittel nach Anspruch 1, dadurch gekennzeichnet, daß mind. 4 der Reste R1 bis R16 Cyclohexylmethylthio $-SCH_2C_6H_{11}$ sind.

5. Schmiermittel nach einem der vorangehenden Ansprüche, dadurch gekennzeichnet, daß X für zwei Wasserstoffatome steht.

6. Schmiermittel nach einem der Ansprüche 1 bis 4, dadurch gekennzeichnet, daß X Zn ist.

7. Schmiermittel nach Ansprüchen 1 bis 4, dadurch gekennzeichnet, daß X Cu ist.

8. Schmiermittel nach Ansprüche 1 bis 4, dadurch gekennzeichnet, daß X Ni ist.

9. Schmiermittel nach einem der vorangehenden Ansprüche, dadurch gekennzeichnet, daß es bei Normaldruck oberhalb von -40°C eine flüssigkristalline Phase bildet.

10. Verwendung eines Schmiermittels nach einem der Ansprüche 1 bis 9 zur Schmierung von Gleitlagern, zur Kaltverformung metallischer Werkstücke oder zur reibungsarmen Entfernung von Werkstücken aus Sintermetall aus formgebenden Werkzeugen.

11. Verwendung eines Schmiermittels nach einem der Ansprüche 1 bis 8 als Kraftstoff für Verbrennungsmaschinen.

Europäisches Patentamt

# EUROPÄISCHER RECHERCHENBERICHT

Nummer der Anmeldung
EP 98 10 2492

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 4 606 859 A (DUGGAN PETER J ET AL) 19.August 1986<br>* Tabellen 1-5 * | 1-9 | C10M105/72<br>C10M135/28<br>C07D487/22<br>C10L1/24 |
| X | US 5 118 431 A (NADER BASSAM S) 2.Juni 1992<br>* Spalte 1, Zeile 13-30 *<br>* Spalte 3, Zeile 32-43 *<br>* Spalte 7, Zeile 41-50 *<br>* Spalte 8, Zeile 50; Ansprüche 11-15 * | 1,4-10 | |
| X | DE 42 24 301 A (BASF AG) 27.Januar 1994<br>* Seite 2, Zeile 1-10; Beispiele 2-6 * | 1,3,5-9,11 | |
| X | US 5 525 516 A (KRUTAK JAMES J ET AL) 11.Juni 1996<br>* Spalte 8, Zeile 54-58; Tabellen 1,3 * | 1-6,9,11 | |
| X | US 2 795 584 A (TELLIS ET AL.) 11.Juni 1957<br>* Beispiele I,IV * | 1,7,11 | RECHERCHIERTE SACHGEBIETE (Int.Cl.6) |
| Y | US 3 432 432 A (DREHER JOHN L) 11.März 1969<br>* Tabelle II * | 1,10 | C10M<br>C07D<br>C10L |
| Y | DE 196 35 058 A (KEESMANN TILL) 3.April 1997<br>* Seite 3, Zeile 43-46 *<br>* Seite 15, Zeile 45-66 * | 1,10 | |

Der vorliegende Recherchenbericht wurde für alle Patentansprüche erstellt

| Recherchenort | Abschlußdatum der Recherche | Prüfer |
|---|---|---|
| MÜNCHEN | 3.Juli 1998 | Kazemi, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie,übereinstimmendes Dokument

EPO FORM 1503 03.82 (P04C03)